# EUROPEAN PATENT APPLICATION

(11) **EP 2 680 092 A2**
(43) Date of publication of application: **01.01.2014**
(21) Application number: 13172475.9
(22) Date of filing: 18.06.2013
(51) Int. Cl.: G05B 19/042

(54) **Apparatus for preparing operating manual list**

(30) Priority: 29.06.2012 JP 2012146503
(71) Applicant: Mitsubishi Electric Corporation, Chiyoda-ku Tokyo 100-8310 (JP)
(72) Inventor: Hirahatake, Masashi, Tokyo, 100-8310 (JP)
(74) Representative: HOFFMANN EITLE

(57) **Abstract**

An operating manual list file in the document format prepared by a general-purpose document preparation software is entered in an apparatus for preparing an operating manual list and the operating manual list file is converted from the document format into the XML format. Subsequently, the operating manual list file converted into the XML format is substitute with the CBP XML format suitable for the CBP. Finally, the suitability of the substitution of the operating manual list file substituted with the CBP XML format is determined, and, if needed, the modification is made. As a result, the preparation of the operating manual list file in the format suitable for the plant display is completed. Thus, operating manual list file prepared in a universal document format is used to prepare an operating manual list file suitable for the display format of a display of a plant.

## Description

### BACKGROUND OF THE INVENTION

### 1. FILED OF THE INVENTION

The present invention relates to an apparatus for preparing an operating manual list that prepares a computerized operating manual list required for plant operation.

### 2. BACKGROUND ART

In order to operate a plant safely, plant operation using an operating manual list is required which describes how to operate the plant in a normal time, and how to respond in the event of a plant failure. In addition, due to recent improvement in IT technique, central control panel facilities are digitized and the operating manual list is also computerized; therefore, multifunctional information is required to be displayed on the operating manual list. Thus, an apparatus for automatically preparing a computerized operating manual list is demanded although enormous operations to prepare an operating manual list are manually performed in the past.

An example of such an apparatus for operating manual list includes a device for automatically preparing an operating manual list described in JP-A-11-65640. The device for automatically preparing an operating manual list includes a control logic verifying device 1, a control logic operation recording device 2, an operation cause retrieving device 3, a designation converting device 4 and an operating manual list describing device 5. The control logic verifying device 1 updates the data of a shared memory A, by operating an numerical arithmetic operation on which the simulating operation of an operator is reflected, the control logic operation recording device 2 records a signal which is different from the data of the shared memory A in a file C, the operation causes retrieving device 3 retrieves the change of the value of an input signal which is the cause for the changed value, and outputs it to a file D, the designation converting device 4 converts a signal name described in the file D into a Japanese designation, and the operating manual list describing device 5 reads the information of the file D converted into the Japanese designation, and automatically prepares the operating manual list, in which the response of control logic to the simulating operation of the operator is summarized. This device enables automatically prepare an operating manual list matched with the movement of the control logic, and reduce the load of an operating manual list preparing work.

As an operating manual list becomes multifunctional, many kinds of functions such as a navigation function of invoking the monitoring information of a plant and a particular monitoring screen are often provided, and it becomes difficult for a user to revise the operating manual list in response to the revision requirement of the operating manual list due to the update and change of the viewpoint of control guidance for security and the plant facilities. In the device for automatically preparing an operating manual list described in JP-A-11-65640, by editing the operating manual list based on a simulating operation of an operator and its response before the operation of the plant in advance, an operating manual list matched with the movement of control logic can be automatically prepared, and the load of an operating manual list preparing work can be reduced; however, it has a problem that a new operating manual list must be prepared by a professional operator if the revision of the operating manual list is required. In particular, when a new function is added to the operating manual list, and the operating manual list is changed, a work load occurs, which cannot be dealt with quickly. Further, sufficient functions are not provided, such as a function for determining the suitability of the conversion by a dictionary file into a display format suitable for a display of a plant and a modification function. Therefore, a tool is demanded for supporting the preparation or the revision of an operating manual list that can be revised easily by a user.

### SUMMARY OF THE INVENTION

The present invention is made to solve the above-mentioned problems, and it is desirable to provide an apparatus for preparing an operating manual list by which an operating manual list file prepared in a universal document format can be used to prepare an operating manual list file suitable for the display format of a display of a plant in response to the requirement of the preparation and revision of an operating manual list.

In order to solve the above-mentioned problems, an apparatus for preparing an operating manual list according to the present invention includes: an operating manual list entering unit configured to enter an operating manual list file prepared by document preparation software; a format conversion unit configured to convert the operating manual list file into a predetermined format; a display format substitution unit configured to substitute the format of the operating manual list file subject to the format conversion with a format suitable for the display format of a display of a plant; and a suitability determination unit configured to determine suitability of the format of the substituted operating manual list file.

The apparatus for preparing an operating manual list of the present invention has an effect that an operating manual list file prepared by document preparation software is converted into a predetermined format, and the suitability of the format of the operating manual list file substituted so as to be suitable for the display format of the display of the plant is determined, thus an operating manual list file suitable for the display format of the display of the plant can be prepared quickly and precisely in response to the requirement of the preparation and revision of the operating manual list.
The foregoing and other object, features, aspects and advantages of the present invention will become more apparent from the following detailed description of the present invention when taken in conjunction with the accompanying drawings.

### BRIEF DESCRIPTION OF THE DRAWINGS

FIG. 1 is a flow chart showing the preparation procedure of an operating manual list in an apparatus for preparing an operating manual list according to an embodiment 1;
FIGS. 2A and 2B are diagrams showing the content of the operating manual list before and after format conversion in the apparatus for preparing an operating manual list according to the embodiment 1;
FIG. 3 is a diagram illustrating the operation of the format conversion in the apparatus for preparing an operating manual list according to the embodiment 1;
FIG. 4 is a schematic diagram showing an operating manual list display system for an operating manual list prepared by the apparatus for preparing an operating manual list according to the embodiment 1; and
FIG. 5 is a diagram showing a method of determining the suitability of the operating manual list prepared by the apparatus for preparing an operating manual list according to the embodiment 1.

### DETAILED DESCRIPTION OF THE INVENTION

An apparatus for preparing an operating manual list of the present invention prepares a computerized operating manual list used in a multifunctional operating manual list display system which is used as the guideline of the operation in a central control panel of an atomic power plant, for example. Namely, the apparatus prepares an operating manual list, which is edited by document preparation software used in a general-purpose PC, having a format that can be displayed on a display of the plant.

In preparing an operating manual list in a plant, it must be ensured that an operating manual list which is held as a master copy in its paper form and a computerized operating manual list that is to be displayed on a display system of a central control panel are identical, and any problem such as garbled characters and the difference of the line feed position as a result of format conversion does not occur with the content of the operating manual list.

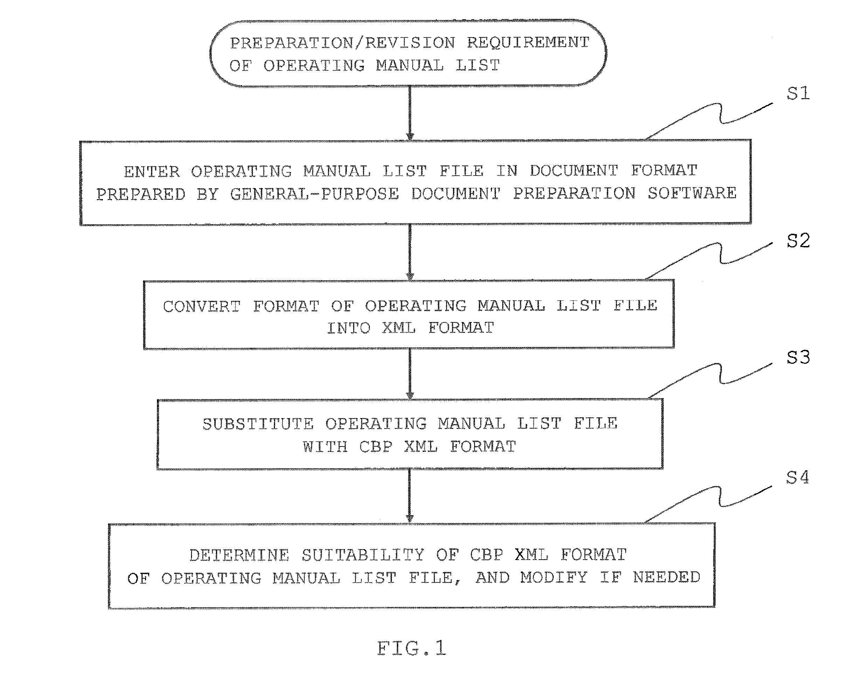

In addition, as a result of the content of the computerized operating manual list becoming multifunctional, a lot of information is described in the operating manual list, and such information must be in cooperation with a monitoring screen and a warning display system; therefore, an operating manual list must be prepared in the eXtensible Markup Language (XML) format. The apparatus for preparing an operating manual list according to an embodiment of the present invention will now be described with reference to FIG. 1 to FIG. 5.

### (Embodiment 1)

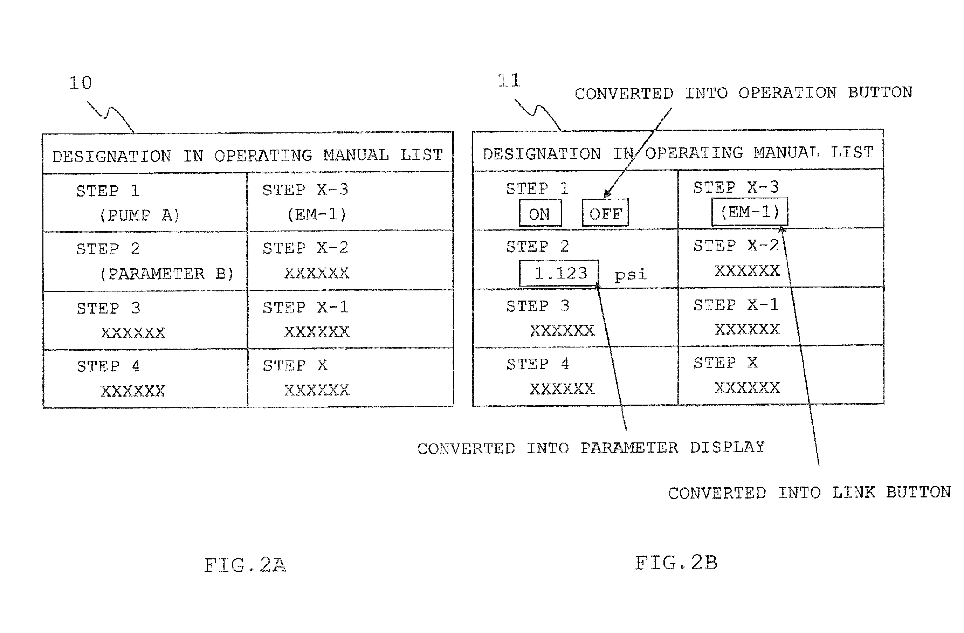

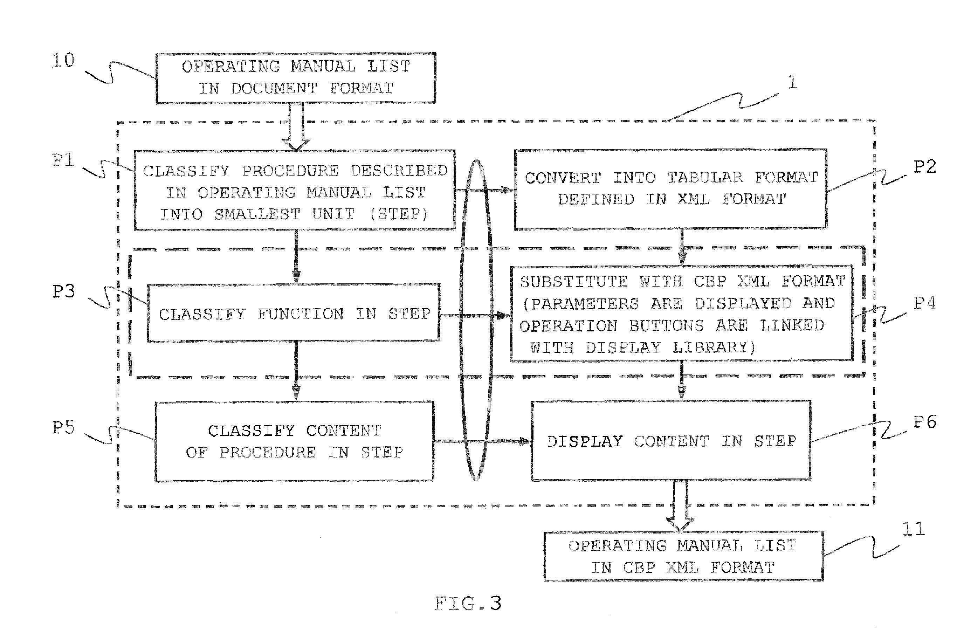

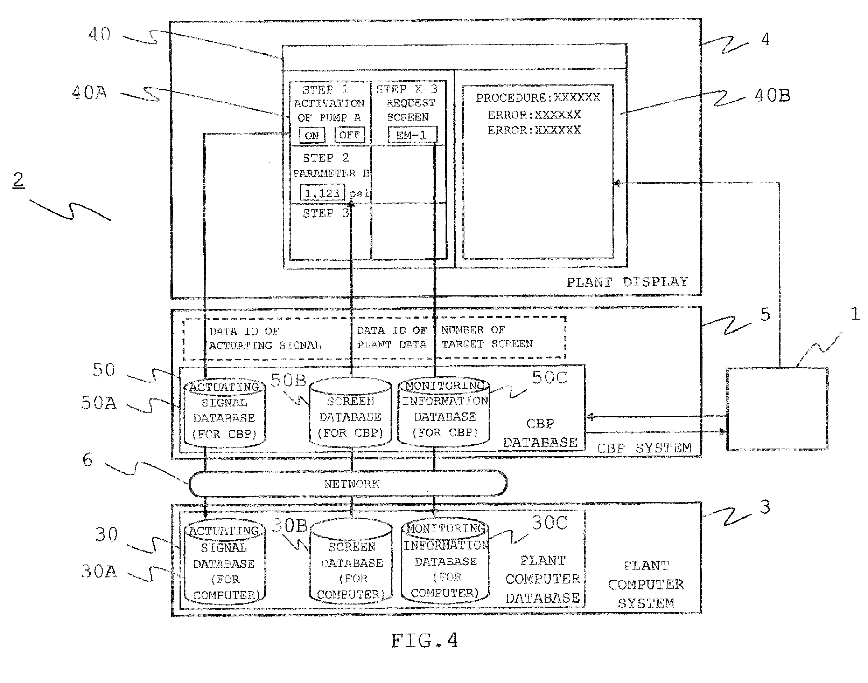

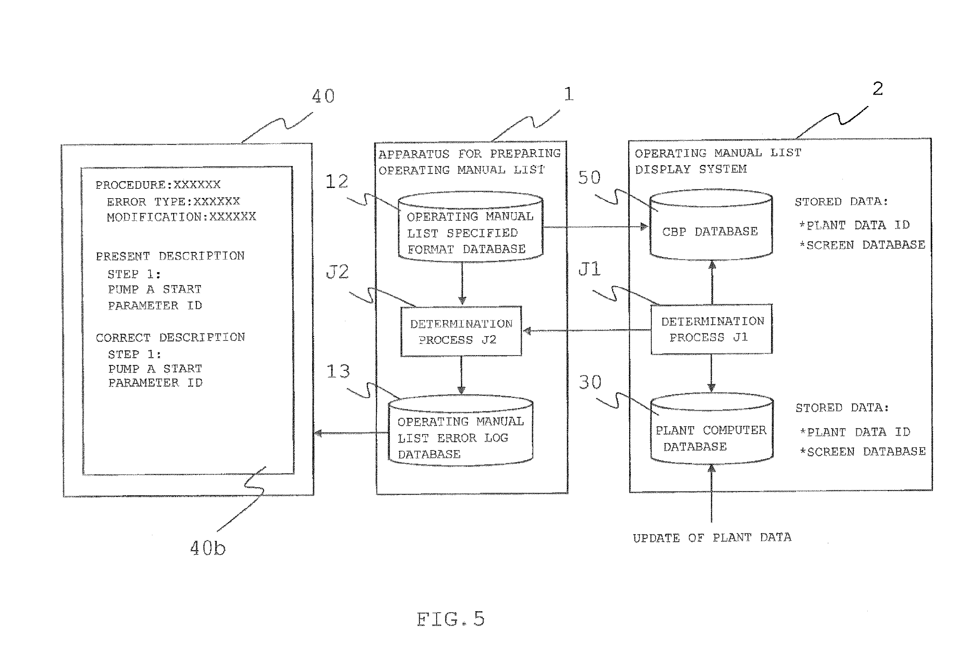

FIG. 1 is a flow chart showing the preparation procedure of an operating manual list in an apparatus for preparing an operating manual list according to the Embodiment 1, FIGS. 2A and 2B are diagrams showing the content of the operating manual list before and after format conversion in the apparatus for preparing an operating manual list according to the Embodiment 1, FIG. 3 is a diagram illustrating the operation of the format conversion in the apparatus for preparing an operating manual list according to the Embodiment 1, FIG. 4 is a schematic diagram showing an operating manual list display system for an operating manual list prepared by the apparatus for preparing an operating manual list according to the Embodiment 1, and FIG. 5 is a diagram showing a method of determining the suitability of the operating manual list prepared by the apparatus for preparing an operating manual list according to the Embodiment 1.

As shown in FIG. 4, an operating manual list display system 2 includes a plant computer system 3 for controlling a plant, a plant display 4 for displaying an operating manual list, and a CBP system 5 for description in a CBP format so that the operating manual list file is displayed on the plant display 4. The plant computer system 3 includes a plant computer database 30 in which an actuating signal database 30a required for a plant operator to operate an actuator and monitoring information, a monitoring information database 30b and a screen database 30c are stored. Corresponding to the plant computer database 30, the CBP system 5, which is connected to the plant computer system 3 through a network 6, includes a CBP database 50 in which an actuating signal database 50a in a CBP format, a monitoring information database 50b and a screen database 30c are stored. The information in the CBP database 50 is displayed on a display screen 40 of the plant display 4 in response to the data ID of the actuating signal, data ID of the plant data and the number of the target screen. The plant operator uses the operating manual list display system 2 to operate the plant while making a confirmation with the plant display 4 for monitoring the plant on a supervisory console of the central control panel based on the operating manual list.

Note that the Computer Based Procedure (CBP) is a computerized operating manual list described in XML so that the information from the plant computer system 3 is compatible with the display format of the plant display 4. The CBP system 5 has a function of displaying an operating manual list 11 used in the monitoring operation of the plant together with the plant computer system 3.

Next, the preparation procedure of an operating manual list in the apparatus for preparing an operating manual list according to the Embodiment 1 of the present invention will be described with reference to a flow chart of FIG. 1. When an operating manual list is required to be prepared or revised, first, an implementor of the operating manual list uses a general-purpose document preparation software to prepare an operating manual list file in the document format. The prepared operating manual list file is entered in an apparatus for preparing an operating manual list 1 (step S1). Then, the entered operating manual list file 10 is automatically converted from the document format into the XML format (step S2). Subsequently, the operating manual list file converted into the XML format is substituted with the CBP XML format suitable for the CBP which is the display format of the plant display (step S3). Finally, the suitability of the substitution of the operating manual list file substituted with the CBP XML format is determined, and, if needed, the modification is made (step S4). As a result of this flow, the conversion of the operating manual list file 10 prepared by the document preparation software into the operating manual list file 11 with the format (CBP XML format) suitable for the display format of the plant display 4 is completed.

FIGS. 2A and 2B show the operating manual list file 10 prepared by the document preparation software (FiG. 2A) and the operating manual list file 11 converted into the CBP XML format (FIG. 2B). For example, the document format (A) includes the descriptions of pump A, parameter B, request screen EM-1; however, in the CBP XML format (B), pump A is converted into operation button (ON, OFF), parameter B into a real value 1.123 psi, and request screen EM-1 into an EM-1 link button. In this manner, the operating manual list 10 prepared in the document format is divided into the smallest work items (Step units). For the information obtained by the division, a function and the content of the procedure are stored in database with one Step taken as 1 unit. The divided operating manual list file is reconstructed in the operating manual list 11 in the CBP XML format that is the display format using the XML format so that the operating manual list file is displayed on the plant display 5.

Next, specific operation in the apparatus for preparing an operating manual list will be described with reference to FIG. 3. First, procedures described in the operating manual list file 10 prepared in the document format are classified into the smallest operation units (Steps) (process P1). The operating manual list file classified into the smallest operation units (Steps) is converted into a tabular format defined in the XML format (process P2). At the same time, functions in the Steps are classified (process P3). With reference to the content of each Step whose function is classified, the operating manual list file converted into the XML format is substituted with the CBP XML format that is the display format of the plant display 3, and parameters are displayed and operation buttons are linked with the display library (process P4). Specifically, when substitution is made on a document file with <p- parameter A>, it is determined that this function is to display the ID of the parameter A, and a parameter display program is set to display the parameter A. That is to say, in the format conversion from the document file, the information required for a program incorporated in the CBP system is extracted (such as, data ID). Further, the content of the procedure in each Step whose function is classified is classified (process P5) so that the content in the Step is displayed in the CBP format (process P6). Here, referring to the style setting of the document file of the operating manual list 10, and the fact that the formatting is in the XML format, the content of the function that the document file indicates is determined, which is, in turn, substituted with a function defined in the CBP format. As a result of such conversion, the operating manual list 11 in the CBP XML format which is the display format of the plant display 4 is completed. The completed operating manual list file 11 is entered in the CBP system 5 in the operating manual list display system 2 shown in FIG. 4.

As shown in FIG. 4, the left half side 40a of the display screen 40 of the plant display 4 in the operating manual list display system 2 is an operating manual list display section showing real data for the plant. The right half side 40b is an error log display section showing an error log (described later). The operating manual list implemented in the operating manual list display system 2 includes (1) a function of requesting a monitoring screen, (2) a function of displaying a parameter, and (3) a function of operating an auxiliary machine. Such information is necessary for a monitoring operation, The information to be displayed is identical to that for the central control panel.

In order to obtain such monitoring information, a parameter or an operation button that is to be displayed in each Step of the operating manual list must be determined, and this information is extracted from the description in the document file 10 of the operating manual list. The method of the extraction is as follows: in the case of (1) a function of requesting a monitoring screen, by specifying a description format as <R-EM1>, this function is determined to be that of requesting an EN-1 screen. In this case, 'R' indicates a request for a screen, and EM-1 indicates the number of the screen. Similarly, by setting (2) and (3) as <P-XXXX> and <C-YYYY>, respectively, the content of the function that the description in the document file 10 of the operating manual list achieves can be determined.

In addition, XXXX and YYYY indicate the parameter IDs of the plant computer database 30 in the plant computer system 3, and the IDs of the monitoring information and the actuating signal are set for the interface programs of the CBP system 5 and the plant computer system 3. Thus, only by converting the operating manual list 10 in the document format into the operating manual list 11 in the CBP XML format, the cooperation of the CBP system 5 and the plant computer system 3 can be determined uniquely, and the information such as XXXX and YYYY is stored in the CBP database 50.

FIG. 5 is a diagram showing a method of determining the suitability of the operating manual list prepared. Here, the operating manual list display system 2 determines the suitability of the prepared operating manual list file 11 in the CBP XML format. First, in the determination process J1, in the operating manual list file 11, the plant data ID base and the screen database stored in both of the plant computer database 30 and the CBP database 50 in the operating manual list display system 2 are compared. Here, whether there is a parameter or an operation button that does not exist is checked. That is to say, by making a comparison of screen data and parameter IDs, the database difference is extracted and an error is detected. By establishing the one-to-one correspondence with the specified format, a description in the specified format in which the error exists is determined, and a part of the description in the specified format in which the error is included, and a part of the present description which must be modified are determined. At the same time, communication errors occurring in the communication between the CBP system 5 and the plant computer system 3 are collected, and these error logs are transmitted to the apparatus for preparing an operating manual list 1. The apparatus for preparing an operating manual list 1 has an operating manual list specified format database 12 in which prohibited formats that cannot be used in the operating manual list and appropriate formats are summarized, and an operating manual list error log database 13 in which error logs are stored, in addition to a function of preparing an operating manual list. In the determination process J2, the specified format in the operating manual list specified format database 12 and the transmitted error log are compared, and the proper description suitable for the specified format is indicated. The result is stored into the operating manual list error log database 13 with error logs. Further, the result is displayed on the error log display screen 40b of the plant display 4 in the operating manual list display system 2.

After converted into the XML format, the operating manual list prepared by the general-purpose document-preparation software is further substituted with the CBP XML format suitable for the CBP system, and the suitability of the substituted format is determined, thus facilitating the preparation of the operating manual list and eliminating a description error in preparing the operating manual list.

In this manner, it can be expected that the apparatus for preparing an operating manual list of the Embodiment 1 has a marked effect that an operating manual list prepared by document preparation software is converted into a predetermined format of the plant, and the suitability of the operating manual list file substituted so as to be suitable for the display format of the display of the plant is determined, thus an operating manual list file suitable for the display format of the display of the plant can be prepared quickly and precisely in response to the requirement of the preparation and revision of the operating manual list.

Note that, although, in this embodiment, a multifunctional operating manual list display system which is used as the guideline of the operation in the central control panel of an atomic power plant is taken an example of a target plant of an operating manual list prepared by the apparatus for preparing an operating manual list, it is applicable to the preparation of operating manual lists in a power plant such as thermal power and hydraulic power, in addition to nuclear power, steel, and a general plant such as community facilities,

Note that, the present invention is not limited to the above-mentioned embodiments and the embodiments may be modified or omitted as appropriate without departing from the scope of the present invention. Various modifications and alterations of this invention will be apparatus to those skilled in the art without departing from the scope and sprit of this invention, and it should be understood that this is not limited to the illustrative embodiments set forth herein.

## Claims

1. An apparatus 1 for preparing an operating manual list preparing an operating manual list file 11 by subjecting an operating manual list file 10 prepared by document preparation software to format conversion into a format suitable for a display format of a plant display 4, which is **characterized by**
an operating manual list entering unit configured to enter the operating manual list file 10 prepared by the document preparation software;
a format conversion unit configured to convert the operating manual list file into a predetermined format;
a display format substitution unit configured to substitute the format of the operating manual list file with the format suitable for the display format of the plant display 4; and
a suitability determination unit configured to determine suitability of the format of the substituted operating manual list file.

2. The apparatus for preparing an operating manual list according to claim 1, wherein the predetermined format is a format described in XML.

3. The apparatus for preparing an operating manual list according to claim 1, wherein a determination result by the suitability determination unit is displayed on a display of the plant.
